# EUROPÄISCHE PATENTSCHRIFT

(11) **EP 0 547 413 B1**
(45) Veröffentlichungstag und Bekanntmachung des Hinweises auf die Patenterteilung: **12.07.2000**
(21) Anmeldenummer: 92120348.5
(22) Anmeldetag: 27.11.1992
(51) Int. Cl.: H04Q 3/545

(54) **Programmgesteuerte Kommunikationsanlage**
Programm controlled communication centre
Centre de communication à commande programmée

(30) Priorität: 17.12.1991 DE 4141640
(43) Veröffentlichungstag der Anmeldung: 23.06.1993
(73) Patentinhaber: SIEMENS AKTIENGESELLSCHAFT, 80333 München (DE)
(72) Erfinder: Leimkötter, Ulrich, Dipl.-Ing., D-4650 Gelsenkirchen (DE)

(56) Entgegenhaltungen:
- ELEKTROTECHNIK UND INFORMATIONSTECHNIK Bd. 106, Nr. 11 , 1989 , WIEN AT Seiten 495 - 503 XP72616 GÖDEL 'Die Software in digitalen Vermittlungssystemen - System-Variante OES-E'
- PHOENIX CONFERENCE ON COMPUTERS AND COMMUNICATIONS, 20. März 1985 , ARIZONA US Seiten 185 - 189 LAWS ET AL. 'MCPOS - A real time telephony operating system'
- BELL SYSTEM TECHNICAL JOURNAL Bd. 62, Nr. 1 , Januar 1983 , NEW YORK US Seiten 303 - 322 GRZELAKOWSKI ET AL. 'DMERT Operating system'

## Beschreibung

Programmgesteuerte Kommunikationsanlagen dienen in Kommunikationssystemen zur Verbindung von Endgeräten untereinander und zur Verbindung dieser Endgeräte mit Kommunikationsnetzen, insbesondere öffentlichen Netzen.

Die Vielfalt bekannter Kommunikationssysteme reicht von einfachen Telefonsystemen für die ausschließliche Übertragung von Sprache bis hin zu voll ausgebauten ISDN-Kommunikationssystemen mit einer simultanen Mehrfach- oder Mischkommunikation von Sprache, Text, Bild und Daten.

An die Kommunikationsanlage in einem Kommunikationssystem sind je nach Komplexitätsgrad des zugrundeliegenden Kommunikationssystems Endgeräte mit vielfältigen Leistungsmerkmalen anschließbar, so zum Beispiel analoge und digitale Telefone, Fernkopierer, Teletext- und Bildschirmtextstationen, Personalcomputer, Datenterminals usw.

Unabhängig vom Komplexitätsgrad des zugrundeliegenden Kommunikationssystems besteht eine Kommunikationsanlage im Prinzip aus einer Vielzahl vermittlungstechnischer Funktionseinheiten und einem programmierbaren digitalen Verarbeitungssystem, das diese Funktionseinheiten steuert und alle vermittlungstechnischen Abläufe überwacht.

Dazu ist es unumgänglich, daß das Verarbeitungssystem ständig mit Informationen über den Betriebszustand der Funktionseinheiten und über jegliche Zustandsänderungen, insbesondere Eingaben an den angeschlossen Endgeräten, informiert wird, um bei Bedarf umgehend entsprechende Steueranweisungen und Meldungen zu erstellen und ausgeben zu können.

Im Regelfall treffen beim Verarbeitungssystem innerhalb kurzer Zeit eine Vielzahl von Informationen ein, die aufgrund der begrenzten Leistungsfähigkeit des Verarbeitungssystems nicht sofort bei ihrem Eintreffen bearbeitet werden können. Die eingetroffenen Informationen, wegen ihrer (das Verarbeitungssystem) anregenden Wirkung auch Anreize genannt, werden in einer Art Warteschlange eingereiht, aus der sie das Verarbeitungssystem nacheinander zur Bearbeitung entnimmt. Da die eingetroffenen Anreize jedoch unterschiedliche Wertigkeiten aufweisen, d.h. die Bearbeitung der Anreize unterschiedlich dringlich ist, hat sich eine sukzessive Bearbeitung der Anreize nach der Reihenfolge ihres Eintreffens als nicht geeignet erwiesen.

Für die Festlegung der Reihenfolge der Bearbeitung wird deshalb die Wertigkeit der eingetroffenen Anreize herangezogen. Dazu wird im Verarbeitungssystem von vornherein jedem eintreffenden Anreiz eine jeweilige Wertigkeit in Form eines Prioritätswertes zugeordnet. Von den in der Warteschlange eingereihten Anreizen wird zur Bearbeitung stets der jeweils höchstpriore Anreiz, der anhand der zugeordneten Prioritätswerte ermittelt wird, entnommen.

Da auch die von einem jeweiligen Endgerät zur Kommunikationsanlage übermittelbaren Anreize unterschiedliche Prioritätswerte aufweisen, kann es vorkommen, daß ein Benutzer an seinem Endgerät wiederholt Eingaben macht, die das betreffende Endgerät über eine längere Zeitdauer hinweg zur aufeinanderfolgenden Abgabe von Anreizen mit hoher Priorität veranlassen.

Um zu vermeiden, daß in einem solchen Fall der Benutzer eines anderen Endgerätes, das zur Abgabe eines einzigen Anreizes mit niedriger Priorität veranlaßt wurde, über eine - unzumutbar - lange Zeitdauer keine Reaktion auf seine Eingabe erhält, wird in der europäischen Patentanmeldung EP-A-0 472 775 bereits eine Trennung zwischen Anreizerfassung und Anreizverarbeitung vorgeschlagen. Ein hochpriores Anreizsicherungsprogrammodul vermerkt ankommende Anreize in den Endgeräten individuell zugeordneten Anreizspeichern. Ein niederpriores Arbitrierungsprogrammodul wählt jeweils einen der Anreizspeicher aus und veranlaßt bei Auffinden eines Anreizes die Bearbeitung des von diesem Anreiz bezeichneten Programmoduls. Nach gänzlicher Abarbeitung des jeweiligen Programmoduls wird der nächste Anreizspeicher ausgewählt.

Werden bei der Bearbeitung eines Programmoduls Informationen gebildet, die von der Kommunikationsanlage an ein oder mehrere Endgeräte gesendet werden sollen, wie z. B. eine alphanumerische Information, die als Folge von 8 Bit-Worten dem Endgerät zugeleitet werden soll, um auf dem Zeilendisplay eines komfortablen Telefongerätes zur Anzeige zu kommen, so werden diese Informationen zunächst in einem, dem als Empfänger vorgesehenen Endgerät individuell zugeordneten Informationsausgabespeicher vermerkt.

Erst bei Abarbeitung des Anreizsicherungsprogrammoduls werden aus den individuell zugeordneten Informationsausgabespeichern die dort hinterlegten Informationen entnommen und an die betreffenden Endgeräte weitergeleitet.

Mit dem Ziel, die Leistungsfähigkeit eines Kommunikationssystems zu erhöhen, wurden Endgeräte entwickelt, die die Kommunikationsanlage entlasten sollen, z. B. dadurch, daß der Signalisierungsaufwand zwischen Endgerät und Kommunikationsanlage verringert wird.

Unter der Bezeichnung "SET151" wurde von Siemens bereits ein solches Endgerät vorgestellt. Bei diesem Endgerät ist ein spezielles Ruftonaktivierungsverfahren implementiert, bei dem die Ruftonerzeugung von der Kommunikationsanlage mittels einer an das Endgerät gesendeten Ausgabeinformation eingeschaltet wird und solange aktiv bleibt, bis von der Kommunikationsanlage eine das Abschalten der Ruftonerzeugung bewirkende Ausgabeinformation an das Endgerät übermittelt wird.

Bei Verwendung eines derartigen Endgerätetyps hat sich jedoch gezeigt, daß in Fällen, in denen ein Benutzer sofort nach Ertönen des Rufsignals das Gespräch annimmt - also noch bevor auf dem Display des Endgeräts die Anzeige, z. B. der Name des Rufenden, komplett erstellt ist - das Rufsignal noch weiter ertönt.

Aufgabe der vorliegenden Erfindung ist es, eine programmgesteuerte Kommunikationsanlage anzugeben, bei der erhöhte Aktivitäten an einem oder mehreren an die Kommunikationsanlage angeschlossenen Endgeräten nicht dazu führen, daß die Reaktionszeiten bei den anderen Endgeräten bestimmte Toleranzgrenzen überschreiten, und dabei Maßnahmen vorzusehen, mit denen eine Ausgabeinformation vordringlich an die Endgeräte übermittelt werden kann.

Gelöst wird diese Aufgabe erfindungsgemäß durch die Merkmale des Patentanspruchs 1.

Zum besseren Verständnis der Funktionen und der Wirkungsweise der im Patentanspruch 1 angegebenen Merkmale, erscheint es erforderlich, zunächst noch einmal auf allgemein bekannte Prinzipien näher einzugehen.

Um den speziellen Steuerungsaufgaben in einer Kommunikationsanlage gerecht werden zu können, ist das digitale Verarbeitungssystem mit einem Multitasking-Betriebssystem versehen, das die für eine Kommunikationsanlage typische Vielzahl von quasi gleichzeitig anfallenden und auch zu erledigenden Einzelaufgaben koordiniert. Da bei einer Kommunikationsanlage häufig hohe Reaktionsgeschwindigkeiten erforderlich sind, wird als Betriebssystem ein sogenanntes Echtzeitbetriebssystem vorgesehen. Die wesentliche Aufgabe dieses Betriebssystems besteht darin, in Abhängigkeit von eingetroffenen oder im Verarbeitungssystem intern gebildeten Anreize, dem Systemprozessor, der die eigentlich ausführende Einheit des digitalen Verarbeitungssystems ist, entsprechende, für eine Reaktion auf die betreffenden Anreize vorgesehene Verarbeitungsvorschriften zuzuweisen.

Solche Anreize, die z. B. die Form von 8 Bit-Wörtern haben können, werden u. a. von den an die Kommunikationsanlage angeschlossenen Endgeräten abgeben, wenn eine Bedienerperson an einem Endgerät Funktionen (z. B. die Uhrzeitanzeige) auslöst. Bei jeder ausgelösten Funktion gibt das Endgerät einen Anreiz an die Kommunikationsanlage ab, wobei den Funktionen unterschiedliche Anreize, z. B. in Form verschiedener Binärkombinationen des 8 Bit-Wortes zugeordnet sind.

Jeder Anreiz wird in der Kommunikationsanlage als Erfordernis angesehen, eine dem Anreiz individuelle Verarbeitungsvorschrift dem Systemprozessor zuzuweisen. Für jeden möglichen Anreiz steht deshalb im digitalen Verarbeitungssystem eine anreizindividuelle Verarbeitungsvorschrift zur Verfügung, die als jeweiliges Programmodul im Systemspeicher des Verarbeitungssystems hinterlegt ist. Da jedes Programmodul gewissermaßen zur Realisierung einer bestimmten Aufgabe dient, wird es bei Abarbeitung durch den Systemprozessor als 'Task' bezeichnet.

Aufgrund der Tatsache, daß jede Abarbeitung eines Programmodules durch einen ensprechenden Anreiz angeregt werden muß, wird dem Betriebssystem ein ereignisgesteuertes Verhalten zugesprochen. Neben den bereits erwähnten, von den angeschlosenen Endgeräten übermittelten Anreizen, werden auch in den verschiedenen vermittlungstechnischen Einheiten wie z. B. in den Leitungsheinheiten, im Koppelnetz etc., also innerhalb der Kommunikationsanlage Anreize erzeugt. Außerdem kann jede 'Task' von sich aus Anreize, sogenannte interne Anreize abgeben, mit denen wiederum die Abarbeitung eines anderen Programmodules angeregt werden kann.

Bei den von außerhalb des digitalen Verarbeitungssystems eingetroffenen Anreizen sind zwei Anreiztypen zu unterscheiden. Zum einen die direkten Anreize, die von sich aus das Betriebssystem zur Kenntnisnahme zwingen, und zum anderen die indirekten Anreize, die in einen Meldespeicher gelangen, der vom digitalen Verarbeitungssystem in gewissen Intervallen, z. B. alle 60 ms, ausgelesen wird.

Zu welchem Typ ein eingetroffener Anreiz zählt, hängt natürlich im wesentlichen davon ab, welche Bedeutung er hat, insbesondere ob und wie zeitkritisch seine Bearbeitung für die Gesamtfunktion der Kommunikationsanlage ist. Grundsätzlich können die Anreize bzw. die von den Anreizen bezeichneten Programmodule ("Tasken") im digitalen Verarbeitungssystem einer Kommunikationsanlage hinsichtlich ihre Bedeutung in drei verschiedene Kategorien eingeteilt werden.

Zur ersten Kategorie gehören all diejenigen "Tasken", für deren Bearbeitung eng bemessene zeitliche Vorgaben bestehen, die in jedem Falle erfüllt werden müssen. Solche Zeitvorgaben ergeben sich z. B. durch die Vorschriften der nationalen Postbehörden bei der Wahlaufnahme oder der Zeichengebung.

Zur zweiten Kategorie zählen diejenigen Anreize bzw. "Tasken", deren Bearbeitung zeitverteilbar ist, deren Bearbeitung also mehrfach unterbrochen werden darf, da für sie ein etwas größerer zeitlicher Spielraum zur Verfügung steht. Wesentlich dabei ist, daß dieser zeitliche Spielraum für alle zeitverteilbaren Anreize bzw. "Tasken" unabhängig von deren Herkunft derselbe sein sollte. Eine sofortige Bearbeitung solcher Anreize ist nicht zwingend erforderlich, ein Überschreiten des Spielraumes muß aber vermieden werden.

Als zeitverteilbar sind im wesentlichen die bei der Signalisierung zwischen den Endgeräten vorgesehenen Anreize bzw. "Tasken" anzusehen. Einerseits hat nämlich der Benutzer eines bestimmten Endgerätes in der Regel keinen nennenswerten Vorteil, wenn seine Eingabe mit höchster Dringlichkeit, also binnen Bruchteilen einer Sekunde bearbeitet wird, andererseits müßten andere Benutzer aber dafür erhebliche Wartezeiten bei den Reaktionen auf ihre Eingaben inkaufnehmen.

Die dritte Kategorie bilden die zeitunkritischen Anreize bzw. "Tasken", deren Bearbeitung zwar notwendig ist, aber keinen Zeitvorgaben unterliegt. Zu den "Tasken" dieser Kategorie zählen z. B. die Programmodule für Prüf- und Verwaltungsaufgaben, deren Ergebnisse relativ selten benötigt werden.

Um dem Betriebssystem bei dem Vorliegen einer Vielzahl eingetroffener Anreize eine Entscheidungshilfe zu geben, welcher der Anreize sofort bearbeitet werden sollte und welche Anreize noch Zeit für die Bearbeitung haben, ist jedem möglichen Anreiz bzw. dem durch den Anreiz bezeichneten Programmodul eindeutig ein Prioritätswert zugeordnet. Selbstverständlich haben die zur ersten Kategorie zählenden Anreize bzw. Programmodule jeweils einen eine höhere Priorität ausdrückenden Prioritätswert, als die zur zweiten und dritten Kategorie gehörenden. Die Anreize bzw. Programmodule der zweiten Kategorie haben dementsprechend jeweils einen eine höhere Priorität repräsentierenden Prioritätswert als die der dritten Kategorie.

Zur Bewältigung der an das Betriebssystem gestellten Koordinations- und Verwaltungsaufgaben sind im Betriebssystem mehrere Teilsysteme, sogenannte Subsysteme vorgesehen, von denen eines als Kommunikationssubsystem bezeichnet wird. Dieses Kommunikationssubsystem trägt jeden intern ausgelösten Anreiz und jeden eingetroffenen Anreiz der ersten und dritten Kategorie sofort in eine Prozeßliste ein, die eine Art Warteliste für die ablaufbereiten Programmodule darstellt.

Ein weiteres Teilsystem des Betriebssystems, das sogenannte Zuteilungssubsystem, ermittelt aus den in der Prozeßliste vermerkten Anreizen jeweils denjenigen Anreiz mit der höchsten Priorität und weist dann das von diesem Anreiz bezeichnete Programmodul dem Systemprozessor zur Ausführung zu.

Ein momentan dem Systemprozessor zugewiesenes Programmodul bleibt solange dem Systemprozessor zugewiesen, bis entweder das Programmodul gänzlich abgearbeitet ist oder bis das Zuteilungssubsystem in der Prozeßliste einen, gegenüber dem das momentan laufende Programmodul bezeichnenden Anreiz höherprioren Anreiz ermittelt. Im letzteren Fall wird die Abarbeitung des momentan laufenden Programmoduls vorübergehend unterbrochen, wobei das Programmodul in der Prozeßliste als ablaufbereit vermerkt bleibt. Das Zuteilungssubsystem weist das neu ermittelte Programmodul dem Systemprozessor zur Ausführung zu.

Auf der Grundlage der vorstehend erläuterten Zusammenhänge wird nun im folgenden auf die im Patentanspruch 1 angegebenen Merkmale näher eingegangen.

Bei eingetroffenen Anreizen der zweiten Kategorie vermerkt das Kommunikationssubsystem in der Prozeßliste ein Anreizsicherungsprogrammodul als ablaufbereit. Aufgrund seines zugeordneten Prioritätwertes gehört dieses Anreizsicherungsprogrammodul entweder dem unteren Bereich der ersten Kategorie oder dem oberen Bereich der zweiten Kategorie an.

Das Anreizsicherungsprogrammodul hat zum einen die Aufgabe, den eingetroffenen direkten Anreiz oder die eingetroffenen indirekten Anreize je nach Herkunft der Anreize in, den sendenden Endgeräten individuell zugeordneten Anreizspeichern zu vermerken. Die Anreizspeicher stellen dabei lediglich individuelle Wartelisten dar, die nach dem "FIFO-Prinzip" (First-In-First-Out) organisiert sind, d. h. daß neue Einträge immer an das Ende der Warteliste angefügt werden und bei einer Entnahme der am Anfang der Warteliste stehende Eintrag entfernt wird.

Das Anreizsicherungsprogrammodul hat zum anderen auch noch die Aufgabe, hinterlegte Informationen an die Endgeräte weiterzuleiten. Bei Bearbeitung eines Programmoduls können nämlich von diesem Informationen gebildet werden, die von der Kommunikationsanlage an ein oder mehrere Endgeräte gesendet werden; so wird z. B. eine Folge von 8 Bit-Worten erzeugt, um auf dem Zeilendisplay eines komfortablen Endgerätes eine alphanumerische Information erscheinen zu lassen. Auch eine Rufton-Ein- bzw. Rufton-Aus-Information für Endgeräte mit Ruftonaktivierungsverfahren wird von einem Programmodul erzeugt. Zunächst werden diese Informationen von dem erzeugenden Programmodul in den, den als Empfänger vorgesehenen Endgeräten individuell zugeordneten Informationsausgabespeichern vermerkt. Für Endgeräte mit Ruftonaktivierungsverfahren bestehen die zugeordneten Informationsausgabespeicher aus wenigstens zwei Teilspeichern, von denen ein erster zur Aufnahme der Rufton-Aus-Information vorgesehen ist, und ein zweiter, der in der Art eines FIFO-Speichers organisiert sein kann, zur Aufnahme aller sonstigen Ausgabeinformationen dient.

Bei Abarbeitung des Anreizsicherungsprogrammoduls werden aus den individuell zugeordneten Informationsausgabespeichern die dort hinterlegten Informationen entnommen und an die betreffenden Endgeräte weitergeleitet.

Durch die Zwischenspeicherung in den Informationsausgabespeichern kann die Abarbeitung des die Information bildenden Programmodules ungehemmt abgeschlossen werden. Wartezeiten aufgrund geringer Übertragungsgeschwindigkeiten auf den Übertragungsstrecken zu den Endgeräten werden vermieden.

Das Anreizsicherungsprogrammodul wird nicht gezwungen, solange zu warten, bis die gesamte, für ein jeweiliges Endgerät vorgesehene Information übertragen worden ist. Sobald das Anreizsicherungsprogrammodul abgearbeitet wird, entnimmt es aus jedem Informationsausgabespeicher, in dem eine Information vermerkt ist, genau eine Teilinformation, z. B. ein 8 Bit-Wort, und veranlaßt die Übertragung auf der zugehörigen Übertragungsstrecke.

Bei Informationsausgabespeichern, die aus wenigstens zwei Teilspeichern bestehen, überprüft das Anreizsicherungsprogrammodul zunächst, ob im ersten Teilspeicher eine Information enthalten ist. Ist dies der Fall, wird diese Information ausgegeben; nur dann, wenn im ersten Teilspeicher keine Information vermerkt sein sollte, wird eine Information aus dem zweiten Teilspeicher entnommen und ausgegeben. Damit wird sichergestellt, daß eine Rufton-Aus-Information mit Vorrang zum Endgerät übermittelt werden kann, und diese Rufton-Aus-Information nicht erst zum Endgerät gelangt, wenn die zuvor im Informationsausgabespeicher hinterlegten Informationen (z. B. für das Zeilendisplay) dem Endgerät vollständig übermittelt wurden.

Die Übertragungszeit von Informationen an die Endgeräte läßt sich dadurch optimieren, daß das Anreizsicherungsprogrammodul in regelmäßigen Zeitabständen abgearbeitet wird, die so bemessen sind, daß einerseits mit den Zeitabständen zwischen zwei Teilinformationen auf derselben Übertragungsstrecke die maximal mögliche Übertragungsgeschwindigkeit dieser Übertragungsstrecke erreicht wird, und andererseits das Anreizsicherungsprogrammodul keine Wartephasen für eine Synchronisierung berücksichtigen muß.

Der Abarbeitung des Anreizsicherungsprogrammodules in diesem Sinne dient ein periodisch eintreffender Anreiz in Form eines Zeittaktes, dessen Periodendauer entsprechend bemessen ist.

Bevor das Anreizsicherungsprogrammodul gänzlich abgearbeitet ist, löst es einen, ein Arbitrierungsprogrammodul bezeichnenden internen Anreiz aus, sofern in der Prozeßliste noch kein das Arbitrierungsprogrammodul bezeichnender Anreiz vermerkt ist. Das Arbitrierungsprogrammodul gehört zur zweiten Kategorie von "Tasken". Sein Prioritätswert liegt am unteren Ende der zweiten Kategorie, also an der Grenze zur dritten Kategorie.

Wie bereits erwähnt wird ein interner Anreiz bzw. das von diesem bezeichnete Programmodul vom Kommunikationssubsystem in der Prozeßliste vermerkt. Das Arbitrierungsprogrammodul, das nur dann vom Systemprozessor abgearbeitet werden kann, wenn kein höherpriores Programmodul in der Prozeßliste vermerkt ist, hat die Aufgabe, nacheinander die den Endgeräten individuell zugeordneten Anreizspeicher abzusuchen und jedesmal bei Auffinden eines wenigstens einen Anreiz enthaltenden Anreizspeichers aus diesem einen Anreiz zu entnehmen und anschließend einen diesem entnommenen Anreiz entsprechenden und gleichwirkenden d. h. dasselbe Programmodul bezeichnenden internen Anreiz auszulösen. Da die in den Anreizspeichern enthaltenen Anreize von den Endgeräten stammen, gehören sie der zweiten Kategorie an und liegen mit ihren Prioritätswerten zwischen dem Prioritätswert des Anreizsicherungsprogrammoduls und dem des Arbitrierungsprogrammmoduls.

Ein wesentlicher Aspekt bei einer erfindungsgemäß realisierten Kommunikationsanlage ist in der gleichmäßigen Verteilung der für zeitverteilbare Aufgaben zur Verfügung stehenden Verarbeitungsleistung auf die angeschlossenen Endgeräte zu sehen. Aufgrund der vorstehend erläuterten Prioritätsstrukturen kann stets nur eine 'Task' der zweiten Kategorie in der Prozeßliste als ablaufbereit vermerkt werden. Das Arbitrierungsprogrammodul kann nämlich nur dann ablaufen, wenn keine 'Task' der zweiten Kategorie in der Prozeßliste als ablaufbereit vermerkt ist. Sobald das Arbitrierungsprogrammodul einen internen Anreiz für ein Programmodul der zweiten Kategorie auslöst, wird der Ablauf des Arbitrierungsprogrammoduls beendet, da dann ein gegenüber dem Arbitrierungsprogrammodul höherpriorisiertes Programmodul in der Prozeßliste als ablaufbereit vermerkt wird.

Sobald also die Bearbeitung eines von einem Endgerät eingetroffenen Anreizes begonnen wurde, kann sie durch eingetroffene Anreize von anderen Endgeräten nicht mehr unterbrochen werden. Der momentan bearbeitete Anreiz bzw. das von diesem bezeichnete Programmmodul wird also gänzlich abgearbeitet, bevor wieder ein von einem Endgerät eingetroffener Anreiz bearbeitet werden kann, wobei dieser Anreiz dann in der Regel von einem anderen, durch die Reihenfolge der Anreizspeicherabfrage bestimmten Endgerät stammt.

Vorteilhafte Weiterbildungen der Erfindung sind in den Unteransprüchen angegeben.

Anhand der Zeichnung soll im folgenden ein Ausführungsbeispiel der Erfindung erläutert werden.

Dabei zeigen
- FIG 1: eine schematische Blockdarstellung einer Kommunikationsanlage im Zusammenhang mit Endgeräten,
- FIG 2: ein Blockschaltbild mit den Komponenten in der zentralen Steuerung,
- FIG 3: eine schematische Darstellung zur Veranschaulichung der Zuweisung von Programmodulen über eine Prozeßliste,
- FIG 4: eine vereinfachende graphische Darstellung zur Veranschaulichung der Zustandsübergänge in einem Multitasking-Betriebssystem,
- FIG 5: eine schematische Blockdarstellung zur Veranschaulichung der Prioritätsstruktur der Programmodule,
- FIG 6 a, b, c, d: schematische Blockdarstellungen in vier Phasen zur Verdeutlichung der betriebssystemrelevanten Zusammenhänge bei der Abarbeitung eines Anreizes,
- FIG 7: ein Ablaufdiagramm zur Veranschaulichung der wesentlichen programmtechnischen Schritte im Betriebssystem,
- FIG 8 a, b: ein Ablaufdiagramm zur Veranschaulichung der wesentlichen programmtechnischen Schritte im Anreizsicherungsprogrammodul,
- FIG 9: ein Ablaufprogramm zur Veranschaulichung der wesentlichen programmtechnischen Schritte im Arbitrierungsprogrammodul.

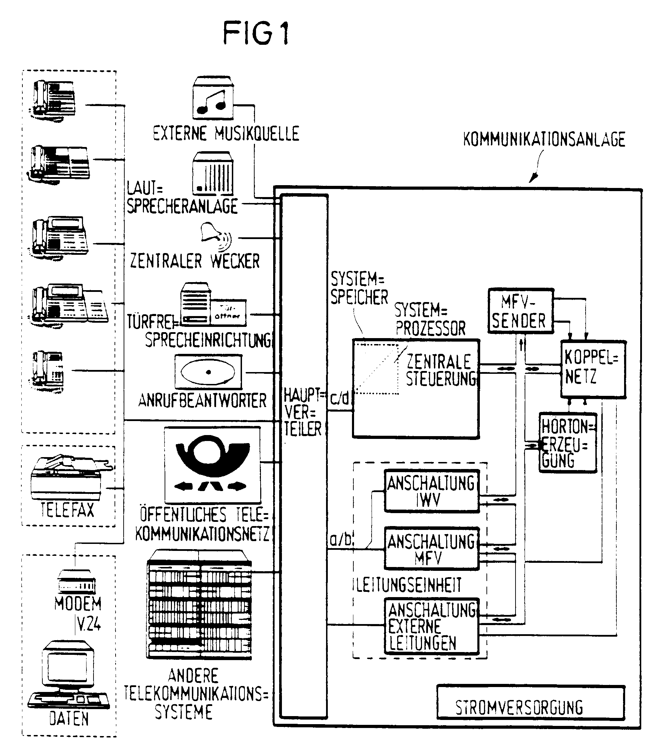

In FIG 1 ist eine Kommunikationsanlage für ein Kommunikationssystem mittleren Komplexitätsgrades schematisch dargestellt. An die Kommunikationsanlage sind eine Vielzahl von Telefonendgeräten anschließbar, wobei in der FIGUR nur einige zur Symbolisierung unterschiedlicher Ausführungsformen angedeutet sind.

Weiterhin sind Telefaxgeräte und über Modems Datensicht- und Verarbeitungsgeräte anschließbar. Die Kommunikationsanlage kann mit dem öffentlichen Telekommunikatonsnetz oder auch mit anderen Telekommunikationssystemen verbunden sein. Auch Sondereinrichtungen wie Anrufbeantworter, Türsprecheinrichtungen etc. können an die Kommunikationsanlage angeschlossen werden.

Die Kommunikationsanlage selbst besteht im Prinzip aus einzelnen, untereinander verbundenen modularen Einheiten. Als wesentlich zu erwähnen sind der Hauptverteiler als Schnittstelleneinrichtung zu den angeschlossenen Endgeräten und Netzen und eine Leitungseinheit mit unterschiedlichen Anschaltungsbaugruppen, die die unterschiedlichen Signalisierungsinformationen von den Endgeräten oder Netzen auf ein innerhalb der Kommunikationsanlage einheitlich verwendetes Format umwandeln.

Eine weitere wesentliche Einheit bildet das Koppelnetz, das die Sprechverbindungen zwischen den Endgeräten untereinander oder zwischen den Endgeräten und angeschlossenen Telekommunikationsnetzen durchschaltet. Das Koppelnetz besteht aus mehreren sogenannten Koppelvielfachen in Form von matrixartig angeordneten Zeilen- und Spaltenleitungen, wobei die Matrixpunkte als ein und ausschaltbare Verbindungselemente ausgebildet sind.

Des weiteren ist ein Hörtonerzeugungsmodul und ein MFV-Sendermodul (MFV = Mehrfrequenzwahlverfahren, IWV = Impulswahlverfahren) vorhanden, wobei das Hörtonerzeugungsmodul zwei Hörtöne unterschiedlicher Frequenz generiert und das MFV-Sendermodul für die Wahl auf externen Leitungen nach dem Mehrfrequenzverfahren die Frequenzen erzeugt. Sämtliche modularen Einheiten sind mit einer zentralen Steuerung verbunden. Diese zentrale Steuerung besteht aus einem digitalen Verarbeitungssystem, das die Funktion der einzelnen Einheiten überwacht, diese zur Ausführung ihrer spezifischen Funktion anregt und von diesen Daten entgegennimmt.

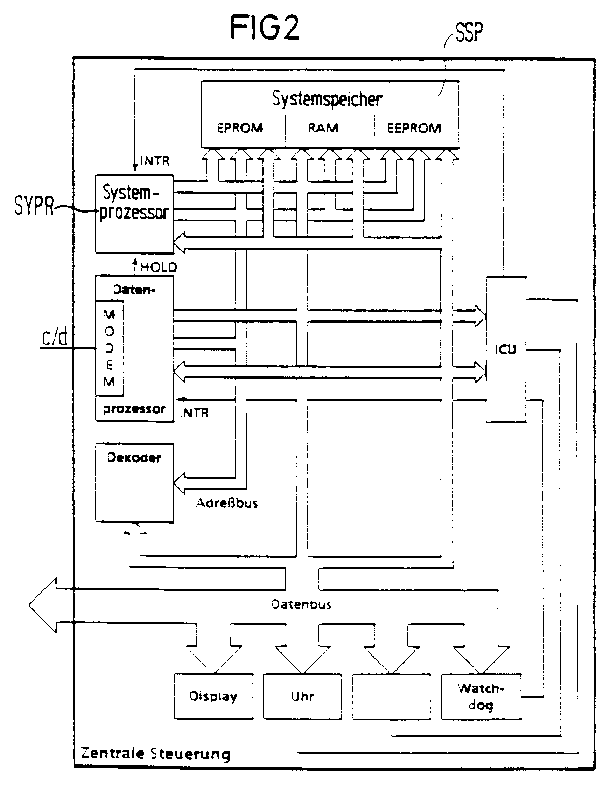

In FIG 2 sind anhand eines Blockschaltbildes die Komponenten der zentralen Steuerung dargestellt. Ein Systemprozessor, z. B. ein Mikroprozessor vom Typ SAB 8088, ist über einen Adressbus, einen Datenbus und einen Steuerbus mit einem Systemspeicher verbunden. Dieser Systemspeicher besteht aus Halbleiterspeicherbausteinen unterschiedlichen Speichertyps; einem EPROM-Speicher in dem das gesamte Systemprogramm unabänderbar hinterlegt ist; einem RAM-Speicher, der als Schreib-Lese-Arbeitsspeicher dient und dessen Daten bei Spannungsausfall verloren sind; und einem EEPROM-Speicher in dem Bedienerdaten z. B. Kurzrufnummern hinterlegt sind. Bei Spannungsausfall verliert dieser Speichertyp seine Information nicht.

Ebenfalls auf den Systemspeicher zugreifen kann ein Datenprozessor der im wesentlichen die C/D-Ader Signalisierung übernimmt und in seiner Grundfunktion einem Modem entspricht. Weiterhin enthält die zentrale Steuerung Decodereinrichtungen zum Auswählen von einzelnen Adressen aus dem Adressbus und mehrere Überwachungseinheiten wie z. B. ein Display, eine Uhr und ein Watchdogtimer. Eine Interruptsteuereinheit ICU steuert die Interruptanforderungen und gibt Interrupts an den Systemprozessor und den Datenprozessor. Über den Datenbus ist die zentrale Steuerung mit den anderen, in Verbindung mit FIG 1 beschriebenen vermittlungstechnischen Einheiten der Kommunikationsanlage verbunden.

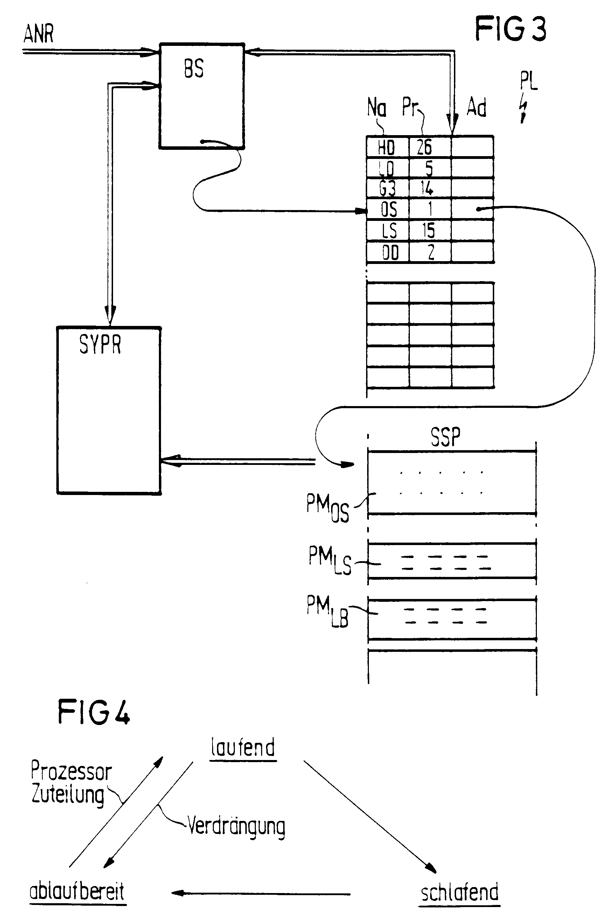

Die FIG 3 zeigt anhand schematischer Funktionsblöcke das Zusammenwirken der Prozeßliste PL und der Programmodule PM in einem Multitasking-Betriebssystem BS mit einem Systemprozessor SYPR.

Vom Prinzip her gesehen, dient der Systemprozessor SYPR ausschließlich zur Bearbeitung des als Betriebssystem BS bezeichneten Programmes. Dieses Betriebssystemprogramm ist jedoch so ausgelegt, daß es in Abhängigkeit von eintreffenden Informationen, die als Anreize ANR bezeichnet werden als auch durch interne Zustände bedingt, nacheinander jeweils einen der ihm zur Verfügung stehenden Programmodule PM auswählt und für eine gewisse Zeitdauer dem Systemprozessor SYPR zur Ausführung zuteilt. Jedes Programmodul PM ist als Programmcodesequenz im Systemspeicher SSP hinterlegt und hat einen Namen NA, z. B. eine Buchstabenkombination, sowie einen Prioritätswert PR.

Dem Betriebssystem BS steht eine Prozeßliste PL zur Verfügung, in der es die ablaufbereiten Programmodule z. B. durch Eintragung des Namens NA, des Prioritätswertes PR und der Adresse AD des Programmodules PM im Systemspeicher SSP vermerkt, und aus der dann das jeweils höchstpriorisierte Programmodul PM für eine Zuweisung an Systemprozessor SYPR ermittelt wird.

Wird einem Programmodul PM der Systemprozessor SYPR zugeteilt, kann das betreffende Programmodul PM den Systemprozessor SYPR solange behalten, bis sich entweder ein höherpriorisiertes Programmodul um Zuteilung des Systemprozessors SYPR bewirbt, oder bis es von sich aus den Systemprozessor SYPR abgibt. Letzteres trifft vor allem auch dann zu, wenn ein Programmodul PM zur Bearbeitung seiner Aufgaben gewisse von anderen Programmodulen zur erbringende Informationen benötigt und auf das Eintreffen dieser Informationen warten muß.

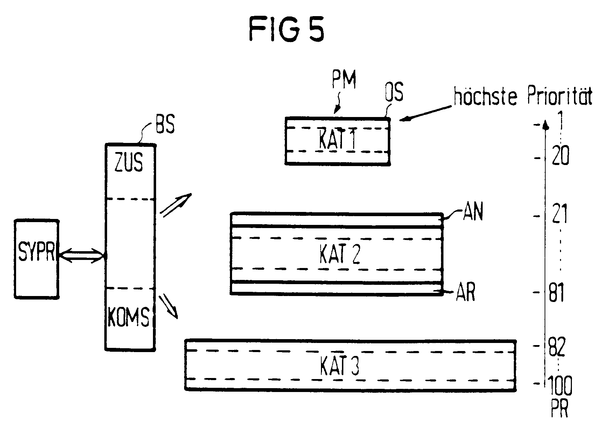

Wie der in FIG 4 dargestellte Zustandsgraph zeigt, befindet sich jedes Programmodul PM des Multitasking-Betriebssystem BS zu einem beliebigen Zeitpunkt in genau einem von im wesentlichen drei Zuständen, die als laufend, ablaufbereit und schlafend bezeichnet werden. Laufend ist demnach dasjenige Programmodul, dem im Moment der Systemprozessor zugeteilt ist. Ablaufbereit sind alle Programmodule, die sich um Zuteilung des Systemprozessors bewerben d. h. in der Prozeßliste vermerkt sind, und als schlafend werden die Programmodule bezeichnet, die auf das Eintreffen bestimmter Anreize oder Meldungen warten.

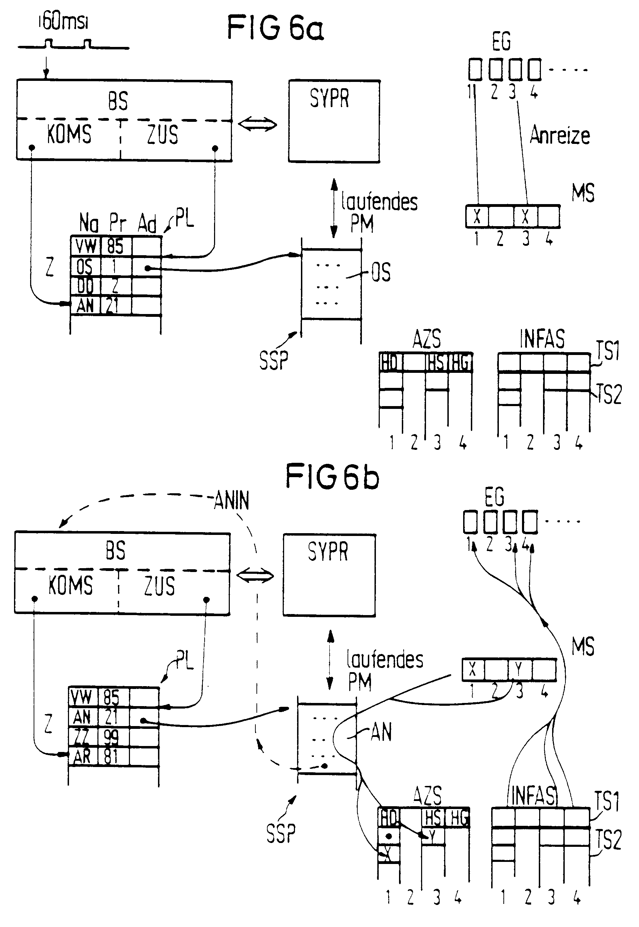

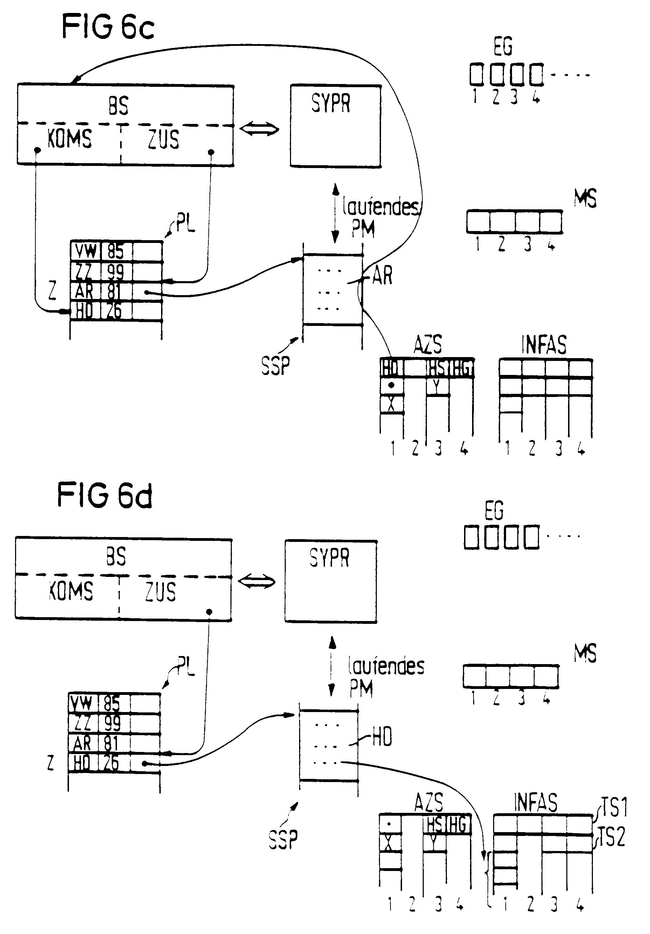

Derjenige Programmteil, der im Betriebssystem BS für die Auswahl und Zuteilung eines Programmodules für den Systemprozessor zuständig ist, wird Zuteilungssubsystem ZUS genannt oder als "Task-Scheduler" bezeichnet. Ein weiteres wesentliches Programmteil des Multitasking-Betriebssystems ist, wie in FIG 5 und 6 angedeutet das Kommunikationssubsystem KOMS.

Die Auswahl des nächsten, dem Systemprozessor SYPR zuzuteilenden Programmodules PM erfolgt mit Hilfe der bereits erwähnten Prozeßliste PL, in der das Kommunikationssubsystem KOMS ablaufbereite Programmodule PM durch Eintragung wenigstens ihres Namens NA vermerkt. In der Regel geschieht dies bei Eintreffen eines Anreizes ANR, der die Bearbeitung eines betreffenden Programmodules veranlaßt.

Das Kommunikationssubsystem KOMS dient weiterhin dazu, um aus dem momentan laufenden Programmodul Aufträge, also interne Anreize an andere Programmodule geben zu können, die dann vom Kommunikationssubsystem KOMS in der Prozeßliste PL als ablaufbereit vermerkt werden.

In FIG 5 sind in schematischer Darstellung das Betriebssystem und die im Systemspeicher vorhandenen Programmodule ihrer zugeordneten Priorität nach dargestellt. Das Multitasking-Betriebssystem BS mit seinem Zuteilungssubsystem ZUS und seinem Kommunikationssubsystem KOMS teilt zu jedem Zeitpunkt dem Systemprozessor SYPR eines der Programmodule PM zu. Wie bereits erwähnt ist jedem Programmodul ein Prioritätswert PR eindeutig zugeordnet. Die Programmodule PM mit der höchsten Priorität gehören der ersten Kategorie KAT1 an und sind für zeitkritische Aufgaben vorgesehen. Die Programmodule PM der niedrigsten Priorität zählen zu der dritten Kategorie KAT3 und betreffen im wesentlichen Verwaltungs-und Testaufgaben. Die Programmodule der zweiten Kategorie KAT2 liegen zwischen den Programmodulen der ersten Kategorie und der dritten Kategorie. Die Programmodule der zweiten Kategorie KAT2 sind zur Bearbeitung von Anreizen vorgesehen die von Endgeräten ausgelöst wurden und deren Bearbeitung zeitverteilbar ist. Das Programmodul mit der höchsten Priorität in der zweiten Kategorie KAT2 ist das Anreizsicherungsprogrammodul AN, und das Programmodul mit der geringsten Priorität in der zweiten Kategorie ist das Arbitrierungsprogrammodul AR. Die angegeben Prioritätswerte PR der jeweiligen Programmodule werden mit höherer Priorität der Programmodule geringer.

Mit den FIG 6 a bis 6 d sollen vier wesentliche Phasen bei der Abarbeitung von eingetroffenen Anreizen verdeutlicht werden. In den FIGUREN ist jeweils in schematischer Blockdarstellung des Multitasking-Betriebssystems BS mit seinem Kommunikationssubsystem KOMS und seinem Zuteilungssubsystem ZUS dargestellt. Weiterhin ist die Prozeßliste PL, der Systemprozessor SYPR und das dem Systemprozessor SYPR momentan zugeteilte im Systemspeicher SSP liegende Programmodul dargestellt. Des weiteren sind symbolisch wenigstens vier Endgeräte EG, zugehörige Meldespeicher MS und die den Endgeräten individuell zugeordneten Anreiz- und Informationsausgabespeicher AZS, INFAS - letztere bestehen aus jeweils einem ersten und einem zweiten Teilspeicher TS1, TS2 - symbolisch angedeutet.

In FIG 6 a soll anhand eines vereinfachten Beispieles der Fall dargestellt werden, der bei Eintreffen eines Anreizes vorliegt. Bei diesem Ausführungsbeispiel wurde davon ausgegangen, daß sämtliche Anreize in Meldespeichern MS hinterlegt werden, also als indirekte Anreize zu verstehen sind. Da die Endgeräte im vorliegenden Beispiel maximal alle 60 ms einen Anreiz absenden können, wird dem Betriebssystem alle 60 ms ein Anreiz zugeführt, der als direkter Anreiz in Form eines Zeittakt-Anreizes die Aufmerksamkeit des Betriebssystems auf eventuelle eingetroffene indirekte Anreize im Meldespeicher MS richten soll. Wie in der FIGUR angedeutet wird vom Zuteilungssubsystem ZUS dasjenige Programmodul PM im Systemspeicher SSP dem Systemprozessor SYPR zugeteilt, das in der Prozeßliste PL das Programmmodul mit der höchsten Priorität ist. Im gezeigten Beispiel ist der Name des momentan laufenden Programmodules OS, sein Prioritätswert ist 1 und die Adresse AD dieses Programmodules im Systemspeicher SSP findet sich als weiterer Eintrag in der Prozeßliste PL.

Beim Eintreffen des Zeittakt-Anreizes veranlaßt das Kommunikationssubsystem KOMS einen Vermerk in der Prozeßliste PL mit dem das Anreizsicherungsprogrammodul AN vermerkt wird. Der Prioritätswert PR des Anreizsicherungsprogrammodules AN ist z. B. 21. Sämtliche in der Prozeßliste als ablaufbereit vermerkten Programmodule, deren Priorität größer ist als die des Anreizsicherungsprogrammodules AN müssen abgearbeitet worden sein bevor das Anreizsicherungsprogrammodul AN laufend werden kann.

Die FIG 6 b zeigt die Phase, in der das Anreizsicherungsprogrammodul AN laufend ist, also dem Systemprozessor SYPR zugeteilt ist. Bei der Abarbeitung des Anreizsicherungsprogrammodules AN werden aus den Meldespeichern MS die dort von den Endgeräten EG hinterlegten Anreize x,y ausgelesen und jeweils in einen, dem sendenden Endgerät EG des jeweiligen Anreizes individuell zugeordneten Anreizspeicher AZS eingetragen. Die Anreizspeicher AZS sind als mehrstufige First-In-First-Out-Speicher ausgebildet. Die Meldespeicher MS werden bei der Entnahme der Anreize geleert.

Sofern in den Informationsausgabespeichern INFAS Informationen hinterlegt sind, wird aus diesen vom Anreizsicherungsprogrammodul AN jeweils genau eine Teilinformation, z. B. ein 8 Bit-Wort, entnommen und an das als jeweiliger Empfänger bestimmte Endgerät EG übermittelt. Zu jedem der Endgeräte EG kann, bedingt durch die Übertragungsstrecke, jeweils höchstens alle 60 ms ein 8 Bit-Wort übertragen werden. Da das Anreizsicherungsprogrammodul AN aus den Informationsausgabespeichern INFAS jeweils stets nur eine Teilinformation, d. h. ein 8 Bit-Wort, entnimmt, und sich danach selbst beendet, ist sichergestellt, da ein periodischer Anreiz nur alle 60 ms ausgelöst wird, daß in dieser Zeitspanne nicht mehr als eine Teilinformation an ein jeweiliges Endgerät EG übermittelt wird.

Besteht ein Informationsausgabespeicher INFAS aus einem ersten und zweiten Teilspeicher TS1, TS2, dann wird vom Anreizsicherungsprogrammodul AN zuerst der erste Teilspeicher TS1 hinsichtlich einer auszugebenden Information überprüft. Ist im Teilspeicher TS1 eine entsprechende Information hinterlegt worden, z. B. die Rufton-Aus-Information, so wird diese an das Endgerät übermittelt, ohne daß aus dem zweiten Teilspeicher TS2 noch eine Information entnommen wird. Da die Rufton-Aus-Information nur ein einziges 8 Bit-Wort ist, ist für den ersten Teilspeicher TS1 eine Speicherkapazität für ein 8 Bit-Wort, also einer einzigen Teilinformation, ausreichend.

Ist im Teilspeicher TS1 jedoch keine Information hinterlegt worden, so wird eine Teilinformation aus dem zweiten Teilspeicher TS2 entnommen. Um eine schnelle Unterscheidung treffen zu können, ob der erste Teilspeicher TS1 leer ist, oder ob er eine zur Ausgabe vorgesehene Information enthält, wird von dem Anreizsicherungsprogrammodul AN nach dem Auslesen einer Information jeweils ein definiertes Quittungswort in den Teilspeicher TS1 zurückgeschrieben, das den betreffenden ersten Teilspeicher TS1 als leer markieren soll.

Bevor das Anreizsicherungsprogrammodul AN sich beendet, wird ein interner Anreiz ANIN, mit dem das Arbitrierungsprogrammodul AR bezeichnet wird, an das Betriebssystem abgegeben. Das Kommunikationssubsystem KOMS trägt daraufhin das Arbitrierungsprogrammmodul AR in der Prozeßliste PL als ablaufbereit ein.

In FIG 6 c ist die Phase dargestellt in die das Arbitrierungsprogrammodul AR laufend wird, also in der Prozeßliste PL kein Programmodul mit einer höheren Priorität vermerkt ist. Das Arbitrierungsprogrammodul AR untersucht nacheinander in einer festgelegten Reihenfolge die Anreizspeicher AZS nach Vermerken. Sobald das Anreizsicherungsprogrammodul AR einen Anreizspeicher AZS erkennt, der wenigstens einen Anreiz enthält, wird ein Anreiz entnommen, und ein interner Anreiz mit dem das gleiche Programmodul bezeichnet wird ausgelöst. Das Kommunikationssubsystem KOMS trägt daraufhin das bezeichnende Programmodul als ablaufbezeit in der Prozeßliste PL ein. In der FIGUR ist der Name dieses Programmodules HD und es trägt den Prioritätswert 26.

Das Arbitrierungsprogrammodul AR bleibt solange in der Prozeßliste PL als ablaufbereit vermerkt bis es keinen Anreizspeicher AZS mehr findet in dem wenigstens ein Anreiz vermerkt ist.

Da durch den internen Anreiz ein Programmodul mit einer gegenüber dem Arbitrierungsprogrammodul AR höheren Priorität in der Prozeßliste PL eingetragen wurde, wird die Abarbeitung des Arbitrierungsprogrammodules AR sofort unterbrochen und das mit dem internen Anreiz bezeichnete Programmodul, z. B. HD, wird, sofern inzwischen kein höherpriorisiertes Programmodul ablaufbereit wird, dem Systemprozessor SYPR zugeteilt.

In FIG 6 d ist die Phase dargestellt in dem das durch einen Anreiz von einem Endgerät bezeichnete Programmodul letztendlich abgearbeitet wird. Im gezeigten Beispiel hat dieses Programmodul den Prioritätswert 26 und den Namen HD. Dieses Programmodul kann dazu vorgesehen sein, um eine Information z. B. die Uhrzeit an dem Display eines Endgerätes anzuzeigen. Diese Information wird vom laufenden Programmodul zuerst in einen dem als Empfänger vorgesehenen Endgerät zugeordnteten Informationsausgabespeicher INFAS eingetragen, um dann später wie im Zusammenhang mit FIG 6 b bereits erläutert vom Anreizsicherungsprogrammodul AN an das Endgerät EG übertragen zu werden. Handelt es sich bei einer solchen Information um eine Rufton-Aus-Information, so wird diese von dem laufenden Programmodul in den ersten Teilspeicher TS1 eines betreffenden Informationsausgabespeichers INFAS eingetragen.

Ist die Abarbeitung dieses Programmmodules abgeschlossen, so wird der entsprechende Vermerk in der Prozeßliste PL gelöscht. Damit könnte wiederum das Arbitrierungsprogrammodul AR laufend werden, das dann einen zu einem anderen Endgerät gehörenden Anreizspeicher AZS ausliest und aus diesem einen Anreiz entnimmt, um ihn in Form eines internen Anreizes an das Betriebssystem weiterzureichen.

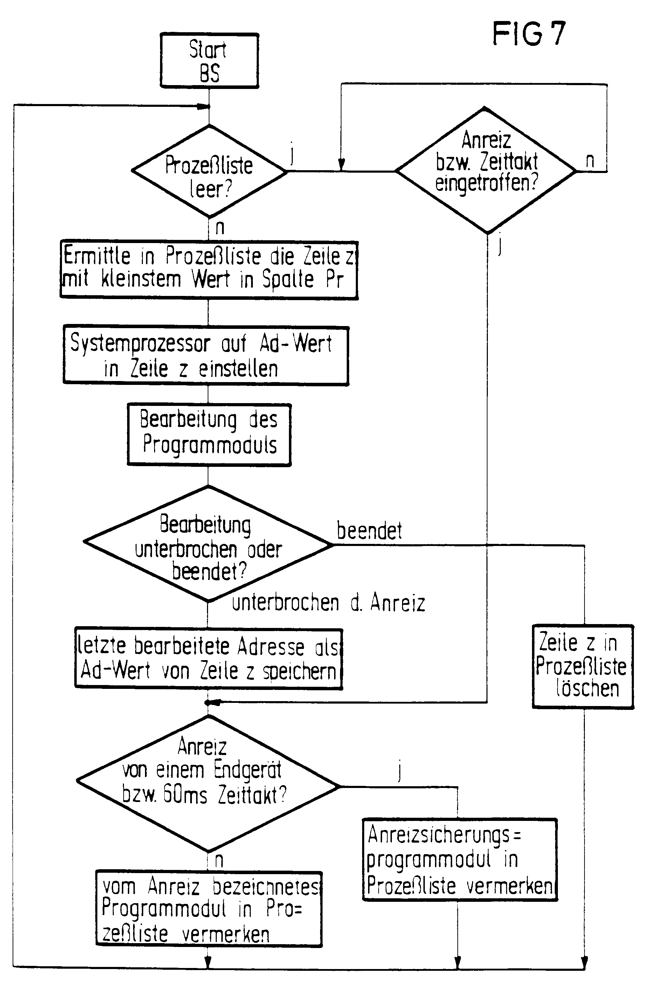

In FIG 7 ist ein Ablaufdiagramm dargestellt, anhand dessen sich die wesentlichen programmtechnischen Schritte, insbesondere die der Rechnerkernzuteilungssequenz im Betriebssystem nachvollziehen lassen.

Sofern die Prozeßliste nicht leer ist wird die Zeile Z in der Prozeßliste ermittelt deren zugehörige Spalte PR für den Prioritätswert den kleinsten Wert aufweist. Daraufhin wird der Systemprozessor auf die Adresse des betreffenden Programmodules im Systemspeicher SSP eingestellt. Diese Adresse kann z. B. in der Spalte AD der Prozeßliste PL hinterlegt werden. Danach erfolgt die Bearbeitung des ermittelten Programmodules.

Die Bearbeitung dieses Programmodules kann beendet werden oder unterbrochen werden. Ist die Bearbeitung beendet, wird in der Prozeßliste PL der diesem Programmodul zugehörige Vermerk, d. h. im vorliegenden Beispiel die Zeile Z gelöscht und die Zuteilungssequenz von neuem durchlaufen. Ist die Bearbeitung unterbrochen worden, so wird die letzte bearbeitete Adresse des Programmodules gespeichert, um für eine Fortsetzung des Programmodules die jeweilige relevante Adresse zur Verfügung zu haben. Die Speicherung der letzten bearbeiteten Adresse kann z. B. in der Spalte des Adresswertes AD in der Prozeßliste PL erfolgen.

Eine Unterbrechung kann durch einen direkten Anreiz von einem Endgerät, dem 60 ms-Zeittakt oder durch irgendeine andere eintreffende Information in Form eines Anreizes ausgelöst worden sein.

Stammt der eingetroffene Anreiz von einem Endgerät oder vom 60 ms-Zeittakt so wird das Anreizsicherungsprogrammodul AN in der Prozeßliste als ablaufbereit vermerkt. Bei allen anderen Anreizen also auch internen Anreizen wird das von dem Anreiz bezeichnete Programmodul in der Prozeßliste vermerkt. Danach wird die Zuteilungssequenz von neuem durchlaufen.

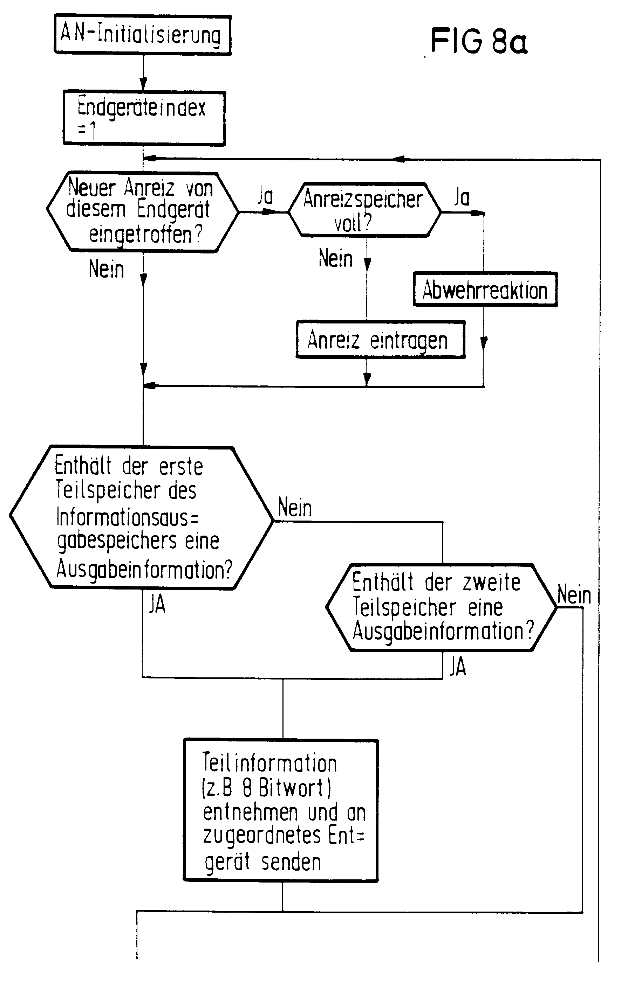

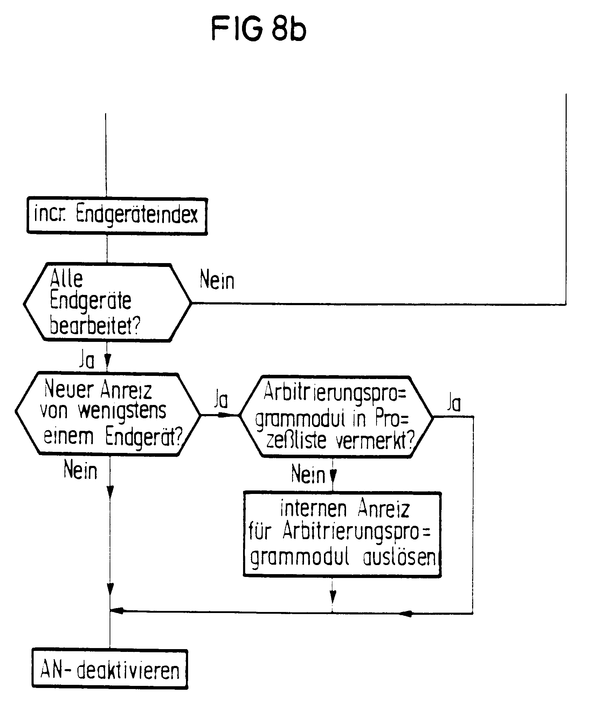

In FIG 8 a, b ist ein Ablaufdiagramm dargestellt, anhand dessen sich die wesentlichen programmtechnischen Schritte im Anreizsicherungsprogrammodul nachvollziehen lassen.

Zunächst wird ein Endgeräteindex auf 1 voreingestellt. Danach wird der diesem durch den Endgeräteindex bezeichneten Endgerät zugeordnete Meldespeicher MS abgefragt und im Falle eines eingetroffenen Anreizes der zugehörige Anreizspeicher hinsichtlich seines Füllstandes überprüft. Ist der Anreizspeicher voll, so wird eine Abwehrreaktion eingeleitet auf die hier nicht weiter eingegangen werden soll, ist der Anreizspeicher noch nicht voll, wird der Anreiz eingetragen.

Aus dem durch den Endgeräteindex bezeichneten Endgerät zugeordneten Informationsausgabespeicher wird, falls vorhanden, eine Teilinformation entnommen und an das bezeichnete Endgerät übermittelt. Besteht der Informationsausgabespeicher aus einem ersten und einem zweiten Teilspeicher, wird zuerst der erste Teilspeicher bezüglich einer hinterlegten Information überprüft. Nur dann, wenn im ersten Teilspeicher keine Information hinterlegt ist, wird eine Teilinformation aus dem zweiten Teilspeicher entnommen und an das betreffende Endgerät übermittelt.

Anschließend wird der Endgeräteindex inkrementiert, d. h. um eins erhöht, und es wird untersucht, ob bereits alle Endgeräte behandelt wurden. Ist dies nicht der Fall, so wird der dem momentanen gültigen Endgeräteindex zugehörige Meldespeicher abgefragt und in analoger Weise ein Anreiz im Anreizspeicher eingetragen und eine Teilinformation aus dem Informationsausgabespeicher entnommen.

Ist sichergestellt, daß alle Endgeräte behandelt wurden, also der Endgeräteindex seinen Maximalwert annimmt, so wird für den Fall, daß wenigstens von einem Endgerät ein Anreiz eingetroffen ist untersucht, ob das Arbitrierungsprogrammodul noch in der Prozeßliste PL als ablaufbereit vermerkt ist. Ist dies nicht der Fall, so wird ein interner Anreiz, der das Arbitrierungsprogrammmodul bezeichnet, ausgelöst, andernfalls deaktiviert sich das Anreizsicherungsprogrammodul.

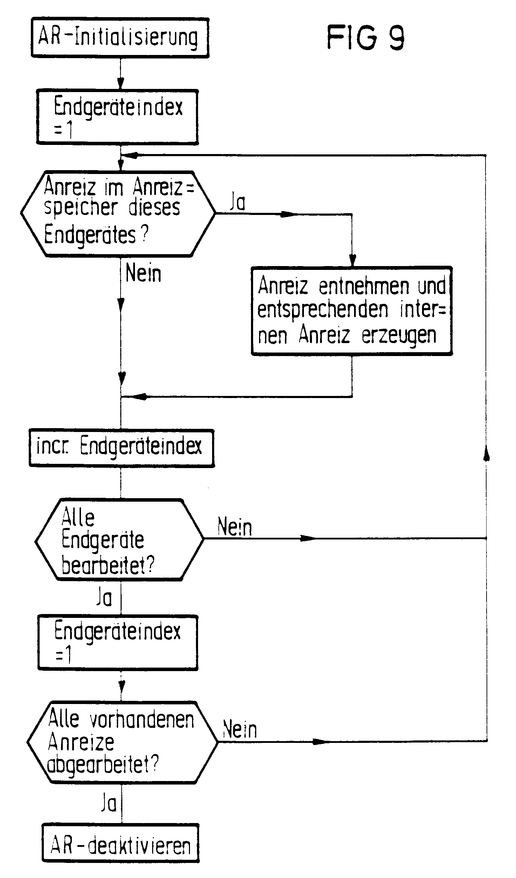

In FIG 9 ist ein Ablaufdiagramm dargestellt mit dem sich die wesentlichen programmtechnischen Schritte im Arbitrierungsprogrammmodul nachvollziehen lassen.

Ausgehend von einer Voreinstellung eines Endgeräteindex auf 1, wird in dem, durch den Endgeräteindex bezeichneten Endgerät individuell zugeordnteten Anreizspeicher nachgesehen, ob wenigstens ein Anreiz vorhanden ist. Ist dies der Fall, so wird dieser Anreiz entnommen und ein dasselbe Programmodul bezeichnender interner Anreiz erzeugt. Anschließend wird der Endgeräteindex inkrementiert und geprüft, ob alle Anreizspeicher nacheinander abgefragt wurden. Ist dies nicht der Fall so wird in analoger Weise wie beim Endgeräteindex 1 verfahren.

Da in einem Anreizspeicher auch mehrere Anreize vermerkt sein können, und bei einer Anfrage nur genau ein Anreiz entnommen wird, werden anschließend sämtliche Anreizspeicher noch einmal abgefragt und bei Vorhandensein eines Anreizes wiederum ein Anreiz entnommen. Erst wenn in keinem Anreizspeicher ein Anreiz enthalten ist, deaktiviert sich das Arbitrierungsprogrammmodul selbst.

## Patentansprüche

1. Programmgesteuerte Kommunikationsanlage zur wahlweisen Verbindung von Kommunikationsendgeräten untereinander
- mit wenigstens einer Leitungseinheit zur signalisierungsartspezifischen Anschaltung von Kommunikationsendgeräten, die im Rahmen einer Verbindungssignalisierung Anreize übermitteln,
- mit einem Koppelnetz zum Durchschalten von Verbindungswegen
- sowie mit einer zur zentralen Steuerung der Kommunikationsanlage dienenden programmierbaren digitalen Verarbeitungseinheit,
-- für die in Zuordnung zu eingetroffenen oder intern ausgelösten Anreizen Jeweilige Verarbeitungsvorschriften vorgesehen sind, die in Form von durch die Anreize bezeichenbaren Programmodulen hinterlegt sind,
-- die einen Systemspeicher zur Speicherung der Programmodule und von Daten aufweist,
-- und die wenigstens einen Systemprozessor aufweist, dem unter Steuerung eines Betriebssystems die Programmodule zur Ausführung zugewiesen werden, wobei das Betriebssystem
--- ein Kommunikationssubsystem aufweist, das bei intern ausgelösten Anreizen das von dem betreffenden Anreiz bezeichnete Programmodul und bei eingetroffenen Anreizen ein Anreizsicherungsprogrammodul hoher Priorität in einer Prozeßliste als ablaufbereit vermerkt,
--- und ein Zuteilungssubsystem aufweist, welches in Abhängigkeit von den Programmodulen individuell zugeordneten Prioritätswerten aus der Prozeßliste jeweils ein Programmodul auswählt und dem Systemprozessor zur Ausführung zuweist, wobei
---- von Programmmodulen gebildete Ausgabeinformationen in jeweiligen, den Empfängern der Ausgabeinformation individuell zugeordneten Informationsausgabespeichern (INFAS) hinterlegt werden, die wenigstens für einen Empfänger aus mindestens einem ersten und einem zweiten Teilspeicher (TS1, TS2) bestehen, und
---- vom Anreizsicherungsprogrammodul (AN)
----- die eingetroffenen Anreize jeweils in einem, der Quelle eines jeweiligen Anreizes individuell zugeordneten Anreizspeicher (AZS) vermerkt werden,
----- die Informationsausgabespeicher (INFAS) nacheinander ausgelesen werden und bei mehrteiligen Informationsausgabespeichern jeweils zunächst der erste Teilspeicher (TS1) bezüglich einer hinterlegten Ausgabeinformation überprüft wird und die zweiten Teilspeicher (TS2) nur dann ausgelesen werden, wenn der erste Teilspeicher (TS1) frei von einer Ausgabeinformation ist, wobei unter Berücksichtigung einer maximal möglichen Übertragungsgeschwindigkeit an die Empfänger daraus jeweils eine Teilinformation an die betreffenden Empfänger weitergeleitet wird,
----- ein interner Anreiz auslösbar ist, der
---- ein Arbitrierungsprogrammodul (AR) niedriger Priorität bezeichnet, das die Anreizspeicher (AZS) nacheinander ausliest und jeweils beim Auffinden eines wenigstens einen Anreiz beinhaltenden Anreizspeichers (AZS) aus diesem einen Anreiz entnimmt und für das von diesem Anreiz bezeichnete Programmodul, dessen Priorität zwischen der des Anreizsicherungsprogrammodules (AN) und der des Arbitrierungsprogrammodules (AR) angeordnet ist, einen internen Anreiz auslöst.

2. Programmgesteuerte Kommunikationsanlage nach Anspruch 1,
**dadurch gekennzeichnet,**
daß in zeitlichen Abständen periodisch eintreffende Anreize vorgesehen sind, die jeweils das Anreizsicherungsprogrammodul (AN) bezeichnen, und daß das Anreizsicherungsprogrammodul die eingetroffenen Anreize aus einem zur Zwischenspeicherung dienenden Meldespeicher (MS) entnimmt.

3. Programmgesteuerte Kommunikationsanlage nach Anspruch 2,
**dadurch gekennzeichnet**,
daß die zeitlichen Abstände des periodisch eintreffenden Anreizes so bemessen sind, daß die maximal mögliche Übertragungsgeschwindigkeit für Ausgabeinformationen erreichbar ist.

4. Programmgesteuerte Kommunikationsanlage nach einem der vorhergehenden Ansprüche,
**gekennzeichnet** durch
den Anschluß von Kommunikationsendgeräten mit einer Ruftonerzeugung, die bei Empfang einer Rufton-Ein-Information aktiviert und erst bei Empfang einer Rufton-Aus-Information deaktiviert wird.

5. Programmgesteuerte Kommunikationsanlage nach Anspruch 4,
**dadurch gekennzeichnet**,
daß die ersten Teilspeicher der Informationsausgabespeicher ausschließlich zur Hinterlegung der Rufton-Aus-Informationen vorgesehen sind.

6. Programmgesteuerte Kommunikationsanlage nach einem der vorhergehenden Ansprüche,
**dadurch gekennzeichnet**,
daß wenigstens die zweiten Teile der Informationsausgabespeicher (INFAS) jeweils als FIFO-Speicher (First-In-First-Out) eingerichtet sind.

7. Programmgesteuerte Kommunikationsanlage nach einem der vorhergehenden Ansprüche,
**dadurch gekennzeichnet**,
daß wenigstens die zweiten Teile der Informationsausgabespeicher (INFAS) jeweils als Ringspeicher eingerichtet sind.

## Claims

1. Program-controlled communications installation for the optional interconnection of communications terminals
- having at least one line unit for the connection, which is specific to the type of signalling, of communications terminals which communicate events in the context of call signalling,
- having a switching network for switching through connection paths
- and also having a programmable digital processing unit which is used for the central control of the communications installation,
-- for which processing unit respective processing prescriptions are provided, assigned to events which have arrived or have been triggered internally, and are stored in the form of program modules which can be designated by the events,
-- which processing unit has a system memory for storing the program modules and data,
-- and which processing unit has at least one system processor, to which the program modules are allocated for execution under the control of an operating system, the operating system
--- having a communications subsystem which records as ready for execution, in a process list, the program module which is designated by the relevant event in the case of internally triggered events and a high-priority event protection program module in the case of events which have arrived,
--- and having an allocation subsystem which selects a respective program module from the process list, as a function of priority values individually assigned to the program modules, and allocates it to the system processor for execution, where
---- output information items formed by program modules are stored in respective information output memories (INFAS) which are individually assigned to the receivers of the output information and comprise at least a first and a second submemory (TS1, TS2) at least for one receiver, and
---- the event protection program module (AN)
----- records each of the events which have arrived in an event memory (AZS) which is individually assigned to the source of a respective event,
----- successively reads out the information output memories (INFAS) and, in the case of multipartite information output memories, in each case firstly checks the first submemory (TS1) with regard to a stored output information item and reads out the second submemory (TS2) only when the first submemory (TS1) is free from an output information item, in which case, taking account of a maximum possible transmission speed to the receivers, from this a respective partial information item is forwarded to the relevant receivers,
----- can trigger an internal event which,
---- designates a low-priority arbitration program module (AR), which successively reads out the event memories (AZS) and, each time it finds an event memory (AZS) which contains at least one event, it removes an event from the said memory and triggers an internal event for the program module which is designated by this event and the priority of which is arranged between that of the event protection program module (AN) and that of the arbitration program module (AR).

2. Program-controlled communications installation according to Claim 1,
characterized
in that events arriving periodically in time intervals are provided, which events designate the respective event protection program module (AN), and in that the event protection program module removes the events which have arrived from an indication store (MS) used for buffering.

3. Program-controlled communications installation according to Claim 2,
characterized
in that the time intervals of the periodically arriving events are dimensioned in such a way that it is possible to achieve the maximum possible transmission speed for output information items.

4. Program-controlled communications installation according to one of the preceding claims,
characterized by
the connection of communications terminals with ringing tone generation which is activated upon reception of a ringing tone on information item and is deactivated only upon reception of a ringing tone off information item.

5. Program-controlled communications installation according to Claim 4,
characterized
in that the first submemories of the information output memories are provided exclusively for storing the ringing tone off information items.

6. Program-controlled communications installation according to one of the preceding claims,
characterized
in that at least the second parts of the information output memories (INFAS) are each set up as FIFO memories (First-In-First-Out).

7. Program-controlled communications installation according to one of the preceding claims,
characterized
in that at least the second parts of the information output memory (INFAS) are each set up as ring memories.

## Revendications

1. Installation de communication commandée par programme pour la liaison à volonté de terminaux de communication entre eux
- comportant au moins une unité de ligne pour le raccordement, spécifique au type de signalisation, de terminaux de communication, qui transmettent des stimulations dans le cadre d'une signalisation de liaison,
- comportant un réseau de connexions pour l'interconnexion de voies de liaison
- ainsi que comportant une unité de traitement numérique, qui peut être programmée et qui sert à la commande centrale de l'installation de communication,
-- pour laquelle il est prévu, en association avec des stimulations qui sont arrivées ou qui ont été déclenchées de manière interne, des prescriptions de traitement qui sont mises en mémoire sous la forme de modules de programme pouvant être désignés par les stimulations,
-- qui comporte une mémoire de système pour la mise en mémoire des modules de programme et de données,
-- et qui comprend au moins un processeur de système, auquel les modules de programme peuvent être, sous la commande d'un système d'exploitation, attribués pour exécution, le système d'exploitation
--- comportant un sous-système de communication, qui note comme prêt au déroulement dans la liste de programmes, en cas de stimulation déclenchée de manière interne, le module de programme désigné par la stimulation concernée et, en cas de stimulation qui est arrivée, un module de programme de sauvegarde de stimulation de grande priorité,
--- et comportant un sous-système d'affectation qui, en fonction de valeurs de priorité associées individuellement aux modules de programme, sélectionne dans la liste d'opérations chaque fois un module de programme et l'affecte au processeur du système pour exécution,
---- des informations de sortie formées par des modules de programme étant mises en mémoire dans des mémoires (INFAS) de sortie d'informations, qui sont associées individuellement au récepteur de l'information de sortie et qui sont constituées au moins pour un récepteur d'au moins une première sous-mémoire (TS1) et une deuxième sous-mémoire (TS2), et
---- par le module (AN) de programme de sauvegarde de stimulation
----- les stimulations arrivées étant notées chaque fois dans une mémoire (AZS) de stimulation associée individuellement à la source d'une stimulation associée,
----- les mémoires (INFAS) de sortie d'information sont lues l'une après l'autre et, en cas de mémoires de sortie d'information à plusieurs parties, il est vérifié chaque fois d'abord dans la première sous-mémoire (TS1) la présence d'une information de sortie mise en mémoire et la deuxième sous-mémoire (TS2) n'est lue que si la première sous-mémoire (TS1) est exempte d'informations de sortie, une sous-information en étant retransmise au récepteur concerné en tenant compte d'une vitesse de transmission la plus grande possible,
----- une stimulation interne peut être déclenchée, qui
---- désigne un module (AR) de programme d'arbitrage de basse priorité, qui lit les mémoires (AZS) de stimulation l'une après l'autre et, chaque fois qu'il trouve une mémoire (AZS) de stimulation contenant au moins une stimulation, y prélève une stimulation et déclenche pour le module de programme désigné par cette stimulation, dont la priorité est entre celle du module (AN) de programme de sauvegarde de stimulation et celle du module (AR) de programme d'arbitrage, une stimulation interne.

2. Installation de communication commandée par programme suivant la revendication 1, caractérisée en ce qu'il est prévu des stimulations qui arrivent périodiquement à des intervalles de temps et qui désignent chaque fois le module (AN) de programme de sauvegarde de stimulation et en ce que le module de programme de sauvegarde de stimulation prélève les stimulations arrivées dans une mémoire (MS) d'inscription servant à la mise en mémoire tampon.

3. Installation de communication commandée par programme suivant la revendication 2, caractérisée en ce que les intervalles de temps de la stimulation arrivant périodiquement sont calculés de manière à pouvoir obtenir la vitesse de transmission maximum possible pour des informations de sortie.

4. Installation de communication commandée par programme suivant l'une des revendications précédentes, caractérisée par le raccordement de terminaux de communication à une production de signal d'appel qui est activé lors de la réception d'une information de connexion de signal d'appel et qui n'est désactivé qu'à la réception d'une information de déconnexion de signal d'appel.

5. Installation de communication commandée par programme suivant la revendication 4, caractérisée en ce que les premières sous-mémoires des mémoires de sortie d'informations sont prévues exclusivement pour la mise en mémoire des informations de déconnexion de signal d'appel.

6. Installation de communication commandée par programme suivant l'une des revendications précédentes, caractérisée en ce qu'au moins les deuxièmes parties des mémoires (INFAS) de sortie d'informations sont réalisées en mémoires FIFO (First-In-First-Out).

7. Installation de communication commandée par programme suivant l'une des revendications précédentes, caractérisée en ce qu'au moins les deuxièmes parties des mémoires (INFAS) de sortie d'information sont réalisées en mémoire circulaire.
